# EUROPÄISCHE PATENTSCHRIFT

(11) **EP 0 598 274 B1**
(45) Veröffentlichungstag und Bekanntmachung des Hinweises auf die Patenterteilung: **18.10.1995**
(21) Anmeldenummer: 93117707.5
(22) Anmeldetag: 02.11.1993
(51) Int. Cl.: A01B 71/06

(54) **Antriebsstrang zwischen einer Zapfwelle eines Zugfahrzeugs und einem Getriebe eines Geräts**
Tractor trailer gearing P.T.O. driveline
Train d'entraînement entre la prise de force d'un tracteur et la transmission d'un appareil

(30) Priorität: 16.11.1992 US 976812
(43) Veröffentlichungstag der Anmeldung: 25.05.1994
(73) Patentinhaber: DEERE & COMPANY, Moline, Illinois 61265 (US)
(72) Erfinder: Stephenson, Roger Dale, Ottumwa, Iowa 52501 (US); Vogt, James Lee, Ottumwa, Iowa 52501 (US); Frimml, Roger William, Ottumwa, Iowa 52501 (US)
(74) Vertreter: Feldmann, Bernhard

(56) Entgegenhaltungen:
- EP-A- 0 289 773
- DE-C- 647 677
- US-A- 3 908 398
- US-A- 4 020 913

## Beschreibung

Die Erfindung betrifft einen Antriebsstrang zwischen einer Zapfwelle eines Zugfahrzeugs und einem Getriebe eines Geräts mit einer an die Zapfwelle angeschlossenen doppelgelenkigen Teleskopwelle und einer von einer das Gerät mit dem Zugfahrzeug verbindenden Deichsel getragenen Welle, wie in EP-A-289773 veröffentlicht.

Wenn z. B. ein Ackerschlepper mit einem von ihm gezogenen und über eine teleskopische Gelenkwelle angetriebenen Gerät eine enge Kurve durchfährt und dabei z. B. aufgrund von Bodenunebenheiten auch die vertikale Beziehung zu dem Gerät ändert, wird die teleskopische Gelenkwelle derart weit zusammen geschoben, daß sie auf Block geht. Eine weitere Krafteinleitung würde die beteiligten Lager bzw. die Gelenkwelle selbst beschädigen.

Die US-A-3,908,398 und die US-A-4,020,913 offenbaren jeweils einen Antriebsstrang eines Mähgeräts bzw. einer Ballenpresse mit einer an die Zapfwelle eines Ackerschleppers angeschlossenen teleskopischen Gelenkwelle und einer mit dieser verbundenen Antriebswelle, die zu einem Getriebe führt. Der Anschluß der Gelenkwelle an die Antriebswelle erfolgt in einem auf eine Deichsel aufmontierten Ständer, der exzentrisch auf einer vertikalen Welle gelagert ist und gegen die Kraft einer Feder aus einer Normalstellung in einer Überlaststellung beweglich ist. Der Ständer wird in die Überlaststellung verschwenkt, wenn beim Durchfahren einer engen Kurve und einer Veränderung der vertikalen Beziehung zwischen dem Ackerschlepper und dem Gerät die teleskopische Gelenkwelle derart weit zusammen geschoben wird, daß sie auf Block geht.

Diesem Antriebsstrang haftet der Nachteil an, daß durch das seitliche Ausknicken des Ständers der Winkel zwischen der Gelenkwelle und der Antriebswelle verkleinert wird und somit die Antriebsübertragung durch das Winkelgelenk infolge der sich ständig ändernden Winkelgeschwindigkeiten immer problematischer wird und zum Rattern führt.

Die der Erfindung zugrunde liegende Aufgabe wird darin gesehen, einen Antriebsstrang vorzuschlagen, mit dessen Hilfe eine problemlose Leistungsübertragung auch dann noch möglich ist, wenn die Gelenkwelle bei Kurvenfahrt auf Block geht.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann die Welle so weit axial ausweichen, wie es erforderlich ist, um Schäden nach dem Auf-Block-Gehen der gelenkigen Teleskopwelle zu vermeiden. Die axiale Gleitbewegung hat darüber hinaus den Vorteil, daß sich der Winkel zwischen der Teleskopwelle und der Welle nicht verkleinert, sondern vergrößert, so daß eine gleichmäßigere Drehbewegung erreicht wird.

Die axiale, d. h. in der Richtung der Deichsel erfolgende Gleitbewegung der Welle kann auf verschiedene Weise sinnvoll erzielt werden. So kann einmal eine in ihrer Länge starre Welle verwendet werden, die selbst gleitend von der Deichsel aufgenommen wird und den Bewegungsanteil in eine weitere Teleskopwelle, die z. B. zu dem Getriebe führt, einleitet. Des weiteren kann auf der Deichsel ein Zusatzrahmen beweglich gelagert sein, der von der auf Block gehenden Welle verschoben werden kann und die Welle in eine zweite Teleskopwelle hineinschiebt oder, falls diese selbst als Teleskopwelle ausgebildet ist, diese zusammenschiebt. Aber auch ohne die Verwendung eines Zusatzrahmens kann die Welle teleskopisch ausgebildet sein, wobei einer der Teile von der Gelenkwelle verstellbar ist.

Wenn vermieden werden soll, daß der verschobene Teil in der verschobenen Stellung verharrt, ist es möglich, diesen durch das Einfügen einer als Zug- oder Druckfeder ausgebildeten Feder wieder automatisch in die Ausgangsstellung zurück zu führen, wenn die axiale Überlastung der ersten als Teleskopwelle ausgebildeten Welle beseitigt ist. Die Feder stützt sich an einem Lager ab, das der Lagerung der Welle auf der Deichsel dient.

Zur einfachen Einleitung der Kraft in die Welle und gleichzeitiger Beaufschlagung der Feder ist auf der Welle ein Sicherungsring vorgesehen, der an dem einen Ende der Feder beim axialen Gleiten zur Anlage kommt, während sich die Feder an dem starren Gegenpol des starren Lagers abstützt.

Eine Führung der Feder ohne Gefahr, daß diese klemmt oder ausknickt, bzw. um sicher zu stellen, daß sie stets die richtige Lage einnimmt und nicht von Schmutz beaufschlagt wird, kann durch die angegebene Verwendung von Federhaltern und einer Federhülse erreicht werden.

In der Zeichnung ist ein nachfolgend näher beschriebenes Ausführungsbeispiel der Erfindung dargestellt. Es zeigt:
- Fig. 1: eine Draufsicht auf ein an einen Zugfahrzeug angehängtes Gerät mit einer Deichsel und einem Antriebsstrang,
- Fig. 2: eine Seitenansicht des Geräts mit der Deichsel und dem Antriebsstrang,
- Fig. 3: eine Draufsicht auf den Antriebsstrang in einer normalen Betriebssituation,
- Fig. 4: eine Draufsicht auf den Antriebsstrang unter Einwirkung einer axialen Last,
- Fig. 5: einen vertikalen Schnitt durch eine in dem Antriebsstrang vorgesehene Federhülse und
- Fig. 6: eine Seitenansicht der Federhülse mit Schnitt durch eine Welle entlang der Linie 6-6 und in Blickrichtung der dazugehörigen Pfeile.

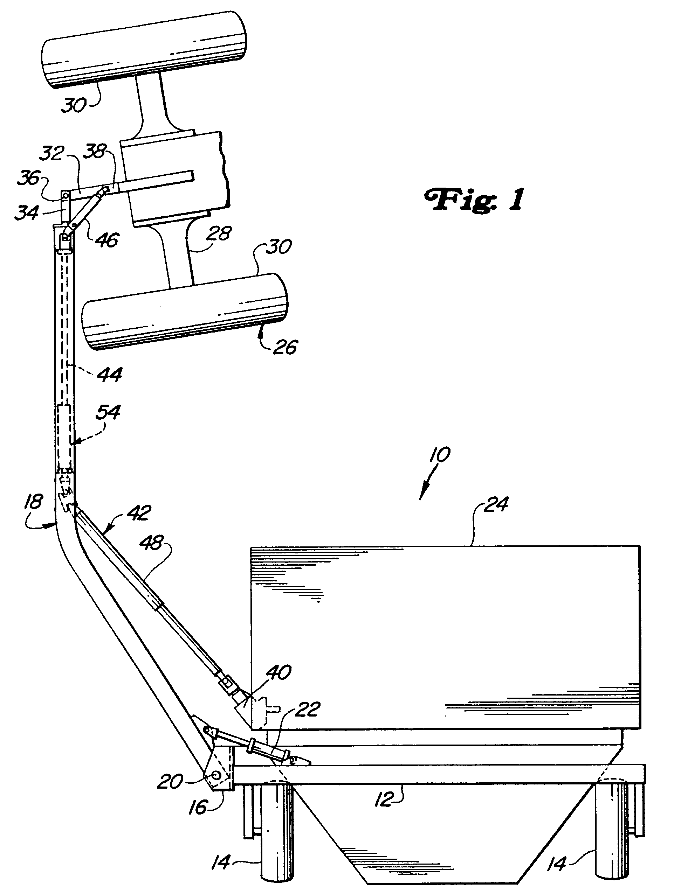

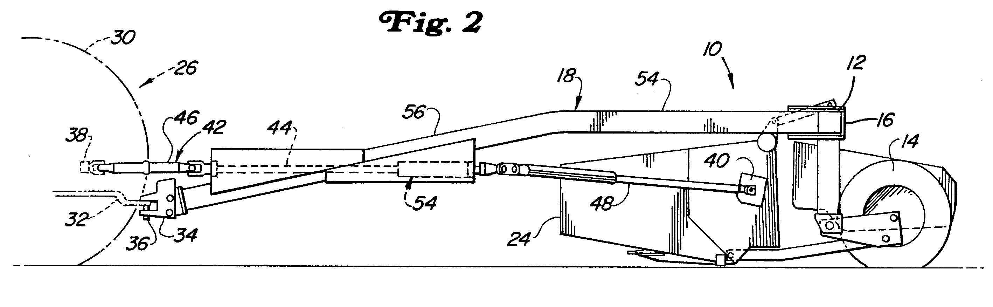

In den Figuren 1 und 2 ist ein gezogenes und angetriebenes Gerät 10 gezeigt, das bei diesem Ausführungsbeispiel als ein Mähschlagzetter ausgebildet ist und einen Querrahmen 12 enthält, der an seinen entgegengesetzten Enden mit einem Paar Räder 14 versehen ist. An das linke Ende des Querrahmens 12 ist ein Halter 16 angeschlossen, der übereinanderliegende Platten enthält, zwischen denen das rückwärtige Ende einer langgestreckten Deichsel 18 aufgenommen und um einen vertikalen Bolzen 20 horizontal schwenkbar angeschlossen ist. Ein aus- und zusammenfahrbarer Hydraulikmotor 22 mit einem Zylinder und einem Kolben ist zwischen den Querrahmen 12 und die Deichsel 18 eingefügt, um die Deichsel 18 wahlweise in eine äußere, abgewinkelte Arbeitsstellung zu bringen, wie dies dargestellt ist, oder sie in eine innere Transportstellung zu verschwenken, in der sich der rückwärtige Abschnitt der Deichsel 18 längs einer Erntebergungsvorrichtung 24 des Geräts 10 erstreckt. Die Erntebergungsvorrichtung 24 enthält einen nicht gezeigten angetriebenen Schneidwerksbalken zum Trennen von Erntegut vom Boden.

Begriffe wie vorne und hinten, links und rechts oder dergleichen sind aus der Sicht eines Betrachters zu sehen, der hinter dem Gerät 10 steht und in die Arbeitsrichtung blickt, also in Figur 2 von rechts nach links.

Die Leistung zum Antreiben der Erntebergungsvorrichtung 24 wird von einem Zugfahrzeug 26 bezogen, das ein Hinterachsgehäuse 28 aufweist, von dessen gegenüberliegenden Enden sich Hinterachsen zur Aufnahme von Hinterrädern 30 erstrecken. Das Zugfahrzeug 26 ist mit einem Zugpendel 32 ausgestattet, an das eine Anhängekupplung 34 an dem vorderen Ende der Deichsel 18 mittels eines Bolzens 36 angeschlossen ist.

Das Zugfahrzeug 26 ist mit einer Zapfwelle 38 versehen. Das Gerät 10 enthält ein Getriebe 40 und einen Antriebsstrang 42, der Leistung von der Zapfwelle 38 zu dem Getriebe 40 überträgt. Der Antriebsstrang 42 enthält eine Welle 44, die auf die Deichsel 18 montiert ist, eine vordere Teleskopwelle 46 mit einem vorderen, an die Zapfwelle 38 angeschlossenen und einem rückwärtigen, an das vordere Ende der Welle 44 angeschlossenen Universalgelenk. Der Antriebsstrang 42 enthält zudem eine zweite Teleskopwelle 48 mit einem an seiner Vorderseite vorgesehenen Universalgelenk, das an das rückwärtige Ende der Welle 44 angeschlossen ist, und mit einem heckseitigen Universalgelenk, das an eine Eingangswelle des Getriebes 40 angreift.

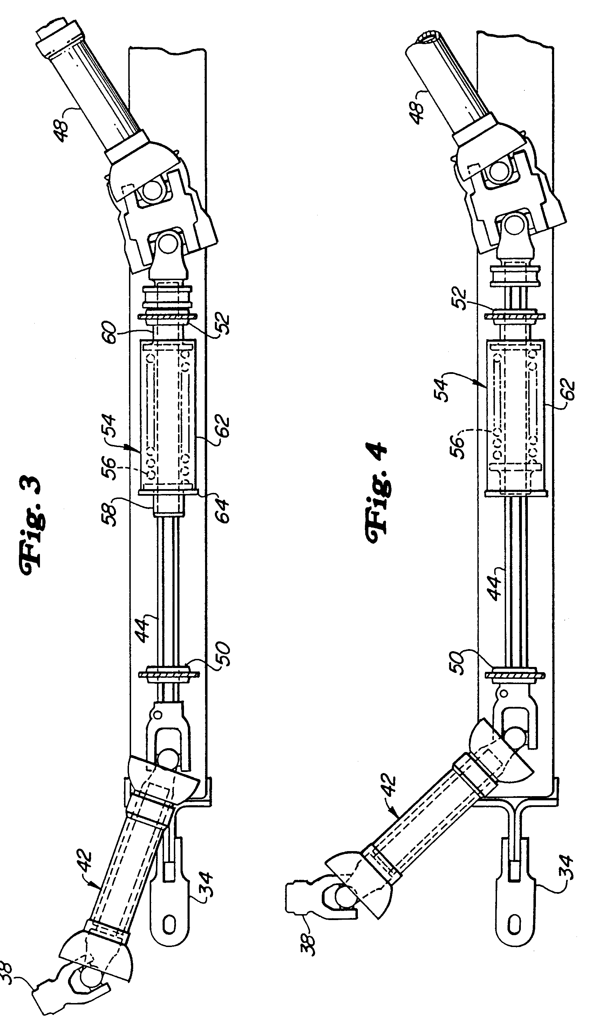

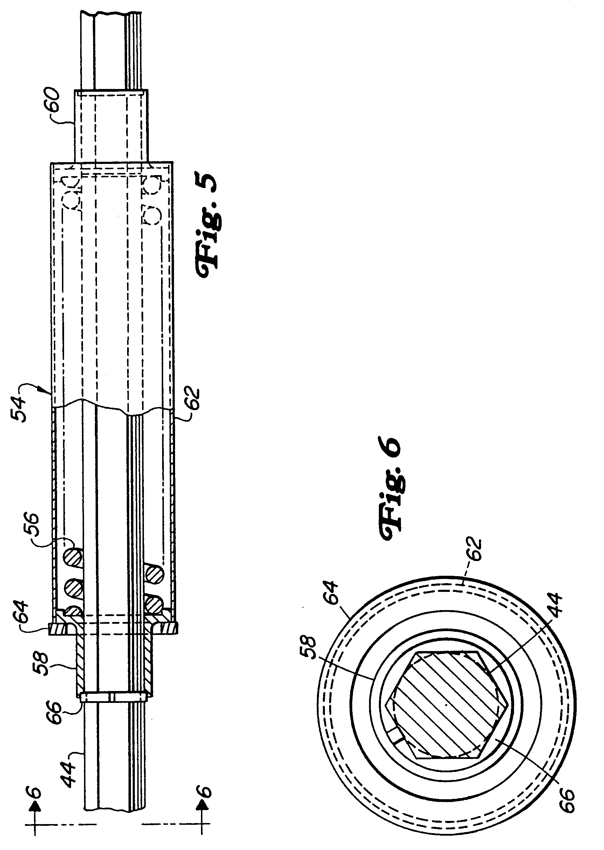

Mit Bezug auf die Figuren 3 bis 6 ist zu erkennen, daß die Welle 44 einen sechskantigen Querschnitt besitzt und mittels eines vorderen und eines rückwärtigen Lagers 50 und 52 auf der Deichsel 18 getragen ist. Die Lager 50, 52 sind nicht im Detail gezeigt, da sie herkömmlich ausgebildet sind und einen drehbaren Innenring mit einer sechseckigen Öffnung, in der die Welle 44 gleitend aufgenommen ist, und einen Außenring enthalten, der an bzw. auf der Deichsel 18 befestigt ist. Neben dem rückwärtigen Lager 52 ist eine Federhülse 54 auf die Welle 44 aufgesetzt, die eine Feder 56 in der Art einer Schraubendruckfeder enthält, die die Welle 44 konzentrisch umgibt und deren entgegengesetzte Enden von vorderen bzw. rückwärtigen Federhaltern 58 bzw. 60 aufgenommen werden. Jeder der Federhalter 58, 60 ist mit einer sechseckigen Öffnung versehen, durch die die Welle 44 geführt ist. Der rückwärtige Federhalter 60 liegt an einer Vorderseite des rückwärtigen Lagers 52 an und ist an eine Innenfläche des rückwärtigen Abschnitts einer zylindrischen Hülse 62 angeschweißt. Hingegen liegt der vordere Federhalter 58 an der Rückseite eines Halterings 64 an, der an den vorderen Abschnitt der Hülse 62 angeschweißt ist. Somit ist der vordere Federhalter 58 frei, sich gegen den Widerstand der Feder 56 zu dem rückwärtigen Federhalter 60 hin zu bewegen, während er von einer nach vorne gerichteten Bewegung von dem Haltering 64 abgehalten wird. Ein Sicherungsring 66 ist in eine in der Welle 44 eingearbeiteten Ringnut eingesetzt, und zwar derart, daß er das vordere Ende einer Nabe des vorderen Federhalters 58 berührt. Auf diese Weise bewirkt der vordere Federhalter 58 ein Zusammendrücken der Feder 56, wenn die Welle 44, wie in Figur 4 gezeigt, nach hinten geschoben wird, wenn einmal die vordere Teleskopwelle 46 während des Durchfahrens einer engen Kurve und/oder dann, wenn das Zugfahrzeug 26 auf das Gerät 10 zukippt bzw. sich auf dieses zubewegt, auf Block geht. Die Möglichkeit der Welle 44, sich nach hinten zu bewegen, verhindert, daß unzulässig hohe Kräfte in den Antriebsstrang 42 eingeleitet werden.

Es wird hier darauf hingewiesen, daß bei dem vorliegenden Ausführungsbeispiel die rückwärtige, zweite Teleskopwelle 48 die nach hinten gerichtete Bewegung der Welle 44 auffängt. Sobald das Gelände, auf dem das Zugfahrzeug 26 fährt, wieder eben wird und das Zugfahrzeug 26 wieder eine normale Stellung in bezug auf das Gerät 10 einnimmt, bewirkt die Feder 56, daß sich der Antriebsstrang 42 und somit die Teleskopwelle 46 wieder in ihre normale, vordere Stellung zurückbewegt, wie sie in Figur 3 gezeigt ist.

In dem bevorzugten Ausführungsbeispiel wird die Welle 44 bewegt, während die Deichsel 18 starr bleibt. Es ist aber auch möglich, eine Deichsel 18 mit einem Zusatzrahmen auszubilden, der gegenüber einer festen Welle 44 verschiebbar ist. Auch auf diese Weise kann das gewünschte Ergebnis, nämlich eine Relativbewegung zwischen der Deichsel 18 und der Welle 44 zu ermöglichen, erreicht werden, die bewirkt, daß beim Durchfahren einer engen Kurve und insbesondere gleichzeitigem Kippen des Zugfahrzeugs 26 auf das Gerät 10 ein Auf-Block-Gehen der vorderen Teleskopwelle 46 verhindert wird.

## Patentansprüche

1. Antriebsstrang (42) zwischen einer Zapfwelle (38) eines Zugfahrzeugs (26) und einem Getriebe (40) eines Geräts (10) mit einer an die Zapfwelle (38) angeschlossenen doppelgelenkigen Teleskopwelle (46) und einer von einer das Gerät (10) mit dem Zugfahrzeug (26) verbindenden Deichsel (18) getragenen Welle, dadurch gekennzeichnet, daß die Welle (44) bzw. ein oder mehrere Teile davon in mit der Deichsel (18) verbundenen Lagern (50, 52) auf der Deichsel (18) in deren Längsrichtung beweglich gelagert ist so daß die Welle so weit axial ausweichen kann, wie es erforderlich ist um Schäden nach dem Auf-Block-Gehen der gelenkigen Teleskopwelle zu vermeiden.

2. Antriebsstrang nach Anspruch 1, dadurch gekennzeichnet, daß die Welle (44) einteilig und/oder von konstanter Länge ist und mit einer zu dem Getriebe (40) führenden Teleskopwelle (48) verbunden ist.

3. Antriebsstrang nach Anspruch 1, dadurch gekennzeichnet, daß die Welle (44) teleskopisch ausgebildet und in einem gegenüber der Deichsel (18) beweglichen Zusatzrahmen oder einem beweglichen Lager (50, 52) in Längsrichtung der Deichsel (18) beweglich aufgenommen ist.

4. Antriebsstrang nach einem oder mehreren der vorherigen Ansprüche, dadurch gekennzeichnet, daß die Welle (44) teleskopisch und in der Längsrichtung der Deichsel (18) längenveränderlich ausgebildet ist.

5. Antriebsstrang nach einem oder mehreren der vorherigen Ansprüche, dadurch gekennzeichnet, daß die bewegliche Welle (44) oder deren beweglicher Teil oder das bewegliche Lager (50, 52) gegen die Kraft einer Feder (56) aus einer Normalstellung in eine Ausweichstellung bewegbar sind.

6. Antriebsstrang nach Anspruch 5, dadurch gekennzeichnet, daß sich die Feder (56) einerseits an der Welle (44) bzw. deren beweglichen Teil und andererseits an einem der Lager (50, 52) axial abstützt.

7. Antriebsstrang nach einem oder mehreren der vorherigen Ansprüche, dadurch gekennzeichnet, daß die Feder (56) beidenends über Federhalter (58, 60) auf der Welle (44) bzw. deren beweglichen Teil gelagert ist.

8. Antriebsstrang nach einem oder mehreren der vorherigen Ansprüche, dadurch gekennzeichnet, daß die Feder (56) von einer Federhülse (54) umgeben ist, die einen der Federhalter (60) starr und einen Federhalter (58) in Grenzen axial beweglich aufnimmt.

## Claims

1. Drive train (42) between a power take-off shaft (38) of a towing vehicle (26) and a gearbox (40) of an implement (10) with a double-jointed telescopic shaft (46) connected to the power take-off shaft (38) and a shaft carried by a drawbar (18) connecting the implement (10) to the towing vehicle (26), characterised in that the shaft (44) or one or more portions thereof is mounted in bearings (50, 52) connected to the drawbar (18) so as to be movable on the drawbar (18) in the longitudinal direction thereof, so that the shaft can yield axially as far as is necessary to avoid damage after locking up of the jointed telescopic shaft.

2. Drive train according to claim 1, characterised in that the shaft (44) is in one piece and/or of constant length and connected to a telescopic shaft (48) leading to the gearbox (40).

3. Drive train according to claim 1, characterised in that the shaft (44) is of telescopic construction and held in an additional frame movable relative to the drawbar (18) or a movable bearing (50, 52) so as to be movable in the longitudinal direction of the drawbar (18).

4. Drive train according to one or more of the preceding claims, characterized in that the shaft (44) is of telescopic construction and variable in length in the longitudinal direction of the drawbar (18).

5. Drive train according to one or more of the preceding claims, characterised in that the movable shaft (44) or the movable portion thereof or the movable bearing (50, 52) are movable against the force of a spring (56) from a normal position into a yielding position.

6. Drive train according to claim 5, characterised in that the spring (56) is axially supported on the one hand on the shaft (44) or the movable portion thereof and on the other hand on one of the bearings (50, 52).

7. Drive train according to one or more of the preceding claims, characterised in that the spring (56) is mounted at both ends by spring holders (58, 60) on the shaft (44) or the movable portion thereof.

8. Drive train according to one or more of the preceding claims, characterised in that the spring (56) is surrounded by a spring sleeve (54) which receives one of the spring holders (60) rigidly and one spring holder (58) axially movably within limits.

## Revendications

1. Train d'entraînement (42) entre un arbre de prise de force (38) d'un véhicule tracteur (26) et une transmission (40) d'un appareil (10), comportant un arbre télescopique doublement articulé (46), qui est raccordé à l'arbre de prise de force (38), et un arbre, qui est porté par un timon (18) reliant l'appareil (10) au véhicule tracteur (26), caractérisé en ce que l'arbre (44) ou une ou plusieurs parties de cet arbre sont montés, dans des paliers (50,52) reliés au timon (18), sur ce dernier de manière à être déplaçables dans la direction longitudinale du timon, de sorte que l'arbre peut se déplacer axialement comme cela s'avère nécessaire pour éviter des endommagements après le passage à l'état de bloc rigide de l'arbre télescopique articulé.

2. Train d'entraînement selon la revendication 1, caractérisé par le fait que l'arbre (44) est formé d'un seul tenant et/ou possède une longueur constante et est relié à un arbre télescopique (48), qui aboutit à la transmission (40).

3. Train d'entraînement selon la revendication 1, caractérisé en ce que l'arbre (44) est réalisé avec une forme télescopique et est logé dans un cadre supplémentaire, qui est mobile par rapport au timon (18), ou dans un palier mobile (50,52) de manière à pouvoir se déplacer dans la direction longitudinale du timon (18).

4. Train d'entraînement selon une ou plusieurs des revendications précédentes, caractérisé par le fait que l'arbre (44) est agencé sous forme télescopique et de manière à présenter une longueur variable dans la direction longitudinale du timon (18).

5. Train d'entraînement selon une ou plusieurs des revendications précédentes, caractérisé en ce que l'arbre mobile (44) ou sa partie mobile ou les paliers mobiles (50,52) sont déplaçables à l'encontre de l'action d'un ressort (56) d'une position normale jusque dans une position écartée.

6. Train d'entraînement selon la revendication 5, caractérisé en ce que le ressort (56) prend appui axialement d'une part sur l'arbre (44) ou sa partie mobile et d'autre part sur l'un des paliers (50,52).

7. Train d'entraînement selon une ou plusieurs des revendications précédentes, caractérisé en ce que le ressort (56) est monté à ses deux extrémités, par l'intermédiaire de dispositifs (58,60) de retenue du ressort, sur l'arbre (44) ou sur sa partie mobile.

8. Train d'entraînement selon une ou plusieurs des revendications précédentes, caractérisé en ce que le ressort (56) est entouré par une douille de ressort (54), qui loge de façon fixe l'un des dispositifs (60) de retenue du ressort et loge l'autre dispositif (58) de retenue du ressort de manière qu'il soit déplaçable axialement dans certaines limites.
